(19) Europäisches Patentamt
European Patent Office
Office européen des brevets

(11) **EP 2 623 928 B1**

(12) **EUROPEAN PATENT SPECIFICATION**

(45) Date of publication and mention
of the grant of the patent:
**17.06.2020 Bulletin 2020/25**

(21) Application number: **10857799.0**

(22) Date of filing: **27.09.2010**

(51) Int Cl.:
***G01B 11/24*** *(2006.01)*     ***G01N 21/90*** *(2006.01)*

(86) International application number:
**PCT/JP2010/066645**

(87) International publication number:
**WO 2012/042583 (05.04.2012 Gazette 2012/14)**

(54) **GLASS BOTTLE INSPECTION DEVICE**

PRÜFVORRICHTUNG FÜR GLASFLASCHEN

DISPOSITIF D'INSPECTION DE BOUTEILLE EN VERRE

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(43) Date of publication of application:
**07.08.2013 Bulletin 2013/32**

(73) Proprietor: **Toyo Glass Co., Ltd.
Shinagawa-ku
Tokyo 141-0022 (JP)**

(72) Inventor: **HARADA Takashi
Kawasaki-shi
Kanagawa 210-0863 (JP)**

(74) Representative: **Haseltine Lake Kempner LLP
Redcliff Quay
120 Redcliff Street
Bristol BS1 6HU (GB)**

(56) References cited:
**JP-A- 6 201 612       JP-A- H06 201 612
JP-A- 2006 276 025    JP-A- 2007 240 469
JP-A- 2007 240 469    US-A- 4 682 023**

## Description

Technical Field

The present invention relates to a technology with which a sealing surface of a mouth portion of a glass bottle is inspected, and in particular, relates to a technology with which wave-shaped recesses in the sealing surface of the mouth portion of the glass bottle (sealing surface waving) is inspected at high speed.

Background Art

In general, in a process of manufacturing glass bottles, glass bottles manufactured in a bottle manufacturing machine are guided to a glass bottle inspection device and whether or not there are defects in the bottles is inspected by the glass bottle inspection device. Glass bottles with specified flaws are rejected as defective bottles. As an example of such a glass bottle inspection device, an inspection device, with which inclination of the sealing surface of the bottle mouth portion (referred to as "sealing surface inclination" hereafter) is inspected, is known. By rejecting glass bottles with large sealing surface inclination using such a glass bottle inspection device, leakage of liquids contained in bottles and troubles occurring when bottles are capped are prevented.

Inspection devices that inspect sealing surface inclination have been disclosed in, for example, Patent Literatures 1 and 2 cited below. In these inspection devices, images (static images) of a rotating bottle mouth portion are continuously taken by an image taking means. In the images having been taken, two points on the sealing surface of the bottle mouth portion are detected and the difference between the two points in the vertical direction is calculated. The calculated difference is regarded as the sealing surface inclination.

Citation List

Patent Literature

PTL 1: Japanese Unexamined Patent Application Publication No. 2007-240468
PTL 2: Japanese Unexamined Patent Application Publication No. 2007-240469

Summary of Invention

Technical Problem

Sealing surface inclination is a defect in that a substantially whole area of a sealing surface of a bottle mouth portion is inclined. Sealing surface inclination can be detected using the technology disclosed in the above-described patent literatures. So-called sealing surface waving is another example of the defects occurring in the sealing surface of the bottle mouth portion and causes leakage of liquids contained in bottles or troubles occurring when bottles are capped. When sealing surface waving occurs, part of the sealing surface has wave-shaped recesses in side view of the bottle mouth portion. The inspection devices disclosed in the above-described PTL 1 and PTL 2 have a problem in that sealing surface waving is not found in many cases.

A task of the present invention is to allow sealing surface waving to be highly precisely detected by utilizing the inspection devices disclosed in PTL 1 and PTL 2. Solution to Problem

According to the present invention, a glass bottle inspection device includes
a rotating means that causes a glass bottle to rotate about a bottle axis,
an illuminating means that emits light toward a bottle mouth portion of the glass bottle,
an image taking means that takes an image of the bottle mouth portion illuminated by the light emitted from the illuminating means, and
an image processing means that detects sealing surface waving in a mouth portion image taken by the image taking means. In the glass bottle inspection device, the image processing means detects two points A and B on a sealing surface of the bottle mouth portion in the mouth portion image taken by the image taking means. Also in the glass bottle inspection device, a line segment c, which connects A and B to each other, is obtained and an intersection D, at which a vertical line d that passes through an arbitrary intermediate point C of the line segment c and the sealing surface of a mouth portion intersect each other, is obtained. Also in the glass bottle inspection device, a difference T between the intersection D and the intermediate point C is calculated and whether or not the glass bottle is good is determined in accordance with a value of T.

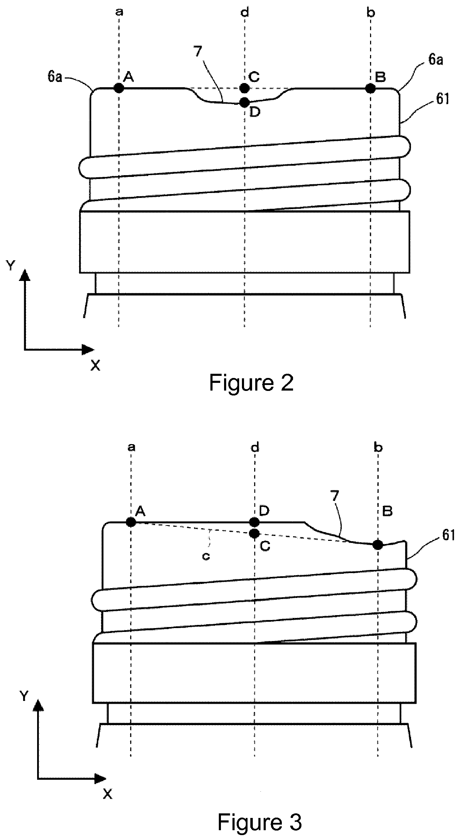

As illustrated in Figs. 2 and 3, the presence of sealing surface waving 7 in the sealing surface of the bottle mouth portion increases the difference between the intermediate point C of the line segment c and the intersection D, at which the vertical line d that passes through C and the sealing surface of the bottle mouth portion intersect each other. Thus, by calculating the difference T between C and D, the following determination can be performed: if T falls within a specified range, the bottle is determined to be good; otherwise, the bottle is determined to be bad because of the presence of a sealing surface waving defect.

The intermediate point C of the line segment c is preferably a midpoint of the line segment c. In this case, when coordinates of the point A are (Ax, Ay), coordinates of the point B are (Bx, By), and a Y-coordinate of the point D is Dy, T can be calculated by using one of the following expressions:

$$\texttt{T = Dy - (Ay + By)/2}$$

and

$$\texttt{T = (Ay + By)/2 - Dy.}$$

Since C is the midpoint of the line segment c, a Y-coordinate of C is (Ay + By)/2, and the Y-coordinate of D is Dy, the difference between C and D in the vertical direction is calculated by using one of the following expressions:

$$\texttt{Dy - (Ay + By)/2}$$

and

$$\texttt{T = (Ay + By)/2 - Dy.}$$

Advantageous Effects of Invention

With a glass bottle inspection device according to the present invention, a related-art sealing surface inclination measurement device can be used to highly precisely detect sealing surface waving only by adding an algorithm that detects sealing surface waving to an image processing means of the related art sealing surface inclination measurement device.

Brief Description of Drawings

[Fig. 1] Fig. 1 generally illustrates a glass bottle inspection device according to the present invention.
[Fig. 2] Fig. 2 illustrates image processing of a mouth portion.
[Fig. 3] Fig. 3 illustrates image processing of the mouth portion.
[Fig. 4] Fig. 4 illustrates a method of detecting sealing surface waving.

Description of Embodiments

An embodiment according to the present invention will be described below with reference to the drawings.

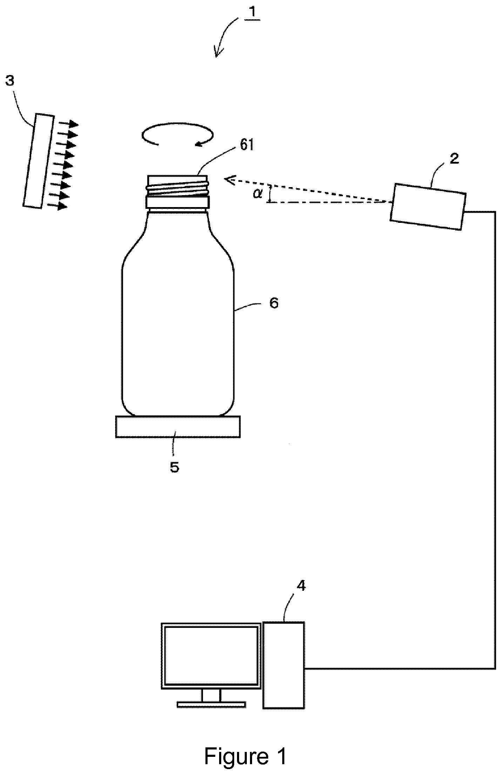

Fig. 1 illustrates a general structure of a glass bottle inspection device 1 according to the present embodiment. In Fig. 1, a glass bottle 6 is guided onto an inspection table 5 by a guiding means (not shown) and rotated on the inspection table 5 about a bottle axis by a rotating means (not shown).
An image taking means 2 and an illuminating means 3 are disposed so as to oppose each other with a mouth portion 61 of the glass bottle 6 interposed therebetween.
The image taking means 2 may use, for example, a highspeed area sensor camera to which a telecentric lens with fixed image magnification is attached. The illuminating means 3 may use, for example, a diffusing planar light source including blue LEDs that emit blue light and are arranged in a matrix.
The optical axis of the image taking means 2 is inclined upward relative to a horizontal line by an angle α, thereby taking images of the bottle mouth portion 61 from slightly below the bottle mouth portion 61. This prevents the image taking means from taking an image of part of the edge of the bottle mouth portion, the part being located behind the bottle mouth portion when seen from the image taking means. It is suitable that $\alpha$ be set to 1° to 3°.

The configuration (hardware configuration) of this inspection device may be the same as that of the inspection device described in the above-described PTL 1 or PTL 2.

Images (still images) taken by the image taking means 2 are transmitted to an image processing means 4 and used to detect sealing surface waving and determine whether or not the glass bottle is good. The image processing means 4 may use a personal computer with a monitor. The monitor is capable of displaying necessary information such as images taken by the image taking means 2 and sealing surface waving (value of T) having been calculated.

Image taking is performed, for example, 24 times per one rotation of the glass bottle (interval of 15°) and sealing surface waving is detected in each of the 24 images.

The image processing means performs the following image processing every time the mouth portion image taken by the image taking means 2 is received.

[Processing of Mouth Portion Image]

Figs. 2 and 3 schematically illustrate the mouth portion images of the mouth portion 61 of the glass bottle taken by the image taking means 2. Fig. 2 illustrates an example of a case in which sealing surface waving 7 is observed at a substantially central position in the mouth portion image, and Fig. 3 illustrates an example of a case in which the sealing surface waving 7 is observed at the right end in the mouth portion image.

Since the mouth portion of the glass bottle appears dark and the background appears bright in the images, the following image processing can be easily performed by binarizing the images.

Upon receipt of a single mouth portion image, the image processing means 4 detects intersections A and B, at which vertical lines a and b set to pass through respective X-coordinate positions slightly further to the inside than left and right ends of the bottle mouth portion 61 intersect a sealing surface the bottle mouth portion 61. It is sufficient that the X-coordinate positions of the vertical lines a and b be set at arbitrary positions slightly further to the inside than a chamfered portion 6a of the sealing surface of the mouth portion.

Next, line segment c that passes through the intersections A and B is obtained.

Next, a midpoint C of the line segment c is obtained, a vertical line d that passes through the midpoint C is set, and an intersection D, at which the vertical line d and the sealing surface of the mouth portion 61 intersect each other, is obtained.

[Detection of Sealing Surface Waving]

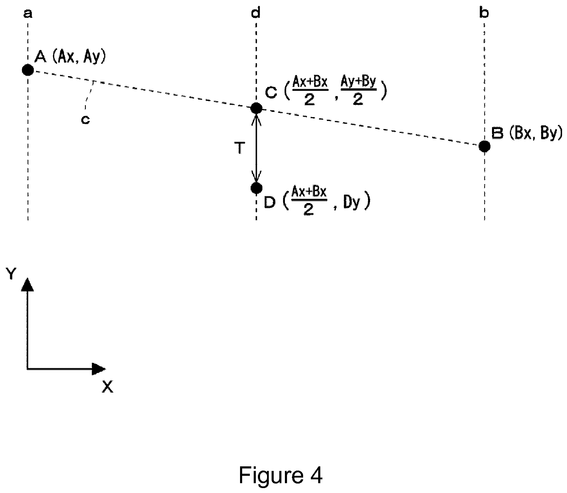

Fig. 4 illustrates a method of detecting sealing surface waving.

When coordinates of point A are (Ax, Ay) and coordinates of the point B are (Bx, By), coordinates of the midpoint C of the line segment c, which connects the points A and B to each other, are ((Ax + Bx)/2, (Ay + By)/2).

When a Y-coordinate of the intersection D, at which the vertical line d and the sealing surface of the mouth portion intersect each other, is Dy and the difference T between C and D is (Y-coordinate of D - Y-coordinate of C), T is expressed by using the following expression:

$$\mathtt{T\ =\ (Ay\ +\ By)/2\ -\ Dy.}$$

Here, the unit of T is pixels.

[Good/Bad Determination]

The image processing means 4 determines whether or not a glass bottle is good in accordance with the calculated T.

There are a variety of methods of determining whether or not a bottle is good. For example, the determination can be performed as follows.

Initially, a range (upper threshold and lower threshold) of T for a good bottle is determined. For example, the upper threshold is 6 pixels and the lower threshold is -8 pixels.

In the case where the image of the mouth portion is taken 24 times per one rotation of a single glass bottle (interval of 15°), T is calculated 24 times. The maximum value and the minimum value out of 24 calculated T values are found. If the maximum value is equal to or smaller than 6 pixels and the minimum value is equal to or greater than - 8, the bottle can be determined to be good, and otherwise, the bottle can be determined to be bad.

That is, if all 24 calculated T values satisfy the following expression, the bottle can be determined to be good, and if there is at least one calculated value that does not satisfy the following expression, the bottle can be determined to be defective:

$$-8 \text{ pixels (lower threshold)} \le T \le 6 \text{ pixels (upper threshold)}.$$

Alternatively, for example, the sum of the absolute values of 24 calculated T values is calculated, and if the sum $\sum|T|$ is greater than a specified threshold value, the bottle can be determine to be defective, and otherwise, the bottle can be determined to be good.

Reference Signs List

1      glass bottle inspection device
2      image taking means
3      illuminating means
4      image processing means
5      inspection table
6      glass bottle
61     mouth portion
7      sealing surface waving

**Claims**

1. A glass bottle inspection device (1) comprising:

    rotating means that causes a glass bottle (6) to rotate about a bottle axis;
    illuminating means (3) that emits light toward a bottle mouth portion (61) of the glass bottle (6);
    image taking means (2) that takes an image of the bottle mouth portion (61) illuminated by the light emitted from the illuminating means (3); and
    image processing means (4) that detects sealing surface waving in a mouth portion image taken by the image taking means (2),
    wherein an optical axis of the image taking means (2) is inclined upward relative to a horizontal line,
    wherein the image processing means (4) is configured to:

       detect intersections A (Ax,Ay) and B (Bx,By), at which vertical lines a and b set further to the inside than left and right ends of the bottle mouth portion (61) intersect a sealing surface of the bottle mouth portion (61) in the mouth portion image taken by the image taking means (2),
       obtain a line segment c, which connects A and B to each other,
       set, in the mouth portion image, a vertical line d that passes through a midpoint C ((Ax+Bx)/2, (Ay+By)/2) of the line segment c, and
       obtain an intersection D, at which the vertical line d and the sealing surface of the bottle mouth portion (61) intersect each other, and
       calculate a difference T between the intersection D and the midpoint C, and
       determine whether or not the glass bottle is good in accordance with a value of T.

2. The glass bottle inspection device (1) according to Claim 1,
   wherein when a Y-coordinate of the intersection D is Dy, T is calculated by using one of the following expressions:

$$T = Dy - (Ay + By)/2$$

and

$$T = (Ay + By)/2 - Dy.$$

**Patentansprüche**

1. Glasflaschen-Prüfeinrichtung (1), umfassend: Dreheinrichtung, welche eine Glasflasche (6) um die Flaschenachse dreht;
   Beleuchtungsmittel (3), das Licht in Richtung eines Flaschenöffnungsabschnitts (61) der Glasflasche (6) emittiert;
   Bildaufnahmeeinrichtung (2), die ein Bild des Flaschenöffnungsabschnitts (61) aufnimmt, beleuchtet von dem durch das Beleuchtungsmittel (3) emittierten Licht, und
   Bildverarbeitungseinrichtung (4), die Wellungenin der Dichtfläche in einem von der Bildverarbeitungseinrichtung (2) aufgenommenen Flaschenöffnungsabschnittsbild erkennt,
   wobei eine optische Achse der Bildaufnahmeeinrichtung (2) relativ zu einer horizontalen Linie nach oben geneigt ist,
   wobei die Bildverarbeitungseinrichtung (4) dafür ausgelegt ist:

   die Überschneidungen A (Ax, Ay) und B (Bx, By) im von der Bildaufnahmeeinrichtung (2) aufgenommenen Flaschenöffnungsabschnittsbild dort zu erkennen, wo die vertikalen Linien a und b eine Dichtfläche des Flaschenöffnungsabschnitts (61) schneiden, wobei die vertikalen Linien a und b im Verhältnis zum linken und rechten Rand des Flaschenöffnungsabschnitts (61) weiter innen verlaufen,
   ein Liniensegment c ermitteln, das A und B miteinander verbindet,
   im Flaschenöffnungsabschnittsbild eine vertikale Linie d ziehen, die durch einen Mittelpunkt C ((Ax + Bx) / 2, (Ay + By) / 2) des Liniensegments c verläuft und
   einen Schnittpunkt D ermitteln, an dem sich die vertikale Linie d und die Dichtfläche des Flaschenöffnungsabschnitts (61) schneiden und
   eine Differenz T zwischen dem Schnittpunkt D und dem Mittelpunkt C berechnen und
   bestimmen, ob die Glasflasche entsprechend einem Wert von T gut oder schlecht ist.

2. Glasflaschen-Prüfeinrichtung (1) gemäß Anspruch 1,
   wobei T gemäß einem der folgenden Ausdrücke berechnet wird, wenn eine Y-Koordinate des Schnittpunkts D gleich Dy ist:

   $$T = Dy - (Ay + By) / 2$$

   und

   $$T = (Ay + By) / 2 - Dy.$$

**Revendications**

1. Un dispositif d'inspection de bouteilles en verre (1) comprenant :

   un moyen de rotation qui fait tourner une bouteille en verre (6) autour d'un axe de bouteille ;
   un moyen d'éclairage (3) qui émet de la lumière vers une partie du goulot de bouteille (61) de la bouteille en verre (6) ;
   un moyen de capture d'image (2) qui capture une image de la partie du goulot de bouteille (61) éclairée par la lumière émise à partir du moyen d'éclairage (3) ; et
   un moyen de traitement d'image (4) qui détecte l'ondulation de surface d'étanchéité dans une image de partie du goulot capturée par le moyen de capture d'image (2),
   dans lequel un axe optique du moyen de capture d'image (2) est incliné vers le haut par rapport à une ligne horizontale,
   dans lequel le moyen de traitement d'image (4) est configuré pour :

détecter les intersections A (Ax, Ay) et B (Bx, By), au niveau desquelles les lignes verticales a et b définies plus loin vers l'intérieur que les extrémités gauche et droite de la partie du goulot de bouteille (61) croisent une surface d'étanchéité de la partie du goulot de bouteille (61) dans l'image de la partie du goulot capturée par le moyen de capture d'image (2),

obtenir un segment de ligne c, qui relie A et B l'une à l'autre, définir, dans l'image de partie du goulot, une ligne verticale d qui passe à travers un point médian C ((Ax + Bx)/2, (Ay + By)/2) du segment de ligne c, et obtenir une intersection D, au niveau de laquelle la ligne verticale d et la surface d'étanchéité de la partie du goulot de bouteille (61) se croisent, et

calculer une différence T entre l'intersection D et le point médian C, et

déterminer si oui ou non la bouteille en verre est en bon état en fonction d'une valeur de T.

2.  Le dispositif d'inspection de bouteilles en verre (1) selon la revendication 1, dans lequel lorsqu'une coordonnée Y de l'intersection D est Dy, T est calculé en utilisant une des expressions suivantes :

$$T = Dy - (Ay + By)/2$$

et

$$T = (Ay + By)/2 - Dy.$$

Figure 1

Figure 2

Figure 3

Figure 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007240468 A
- JP 2007240469 A